# EUROPÄISCHE PATENTSCHRIFT

(11) **EP 2 249 075 B1**
(45) Veröffentlichungstag und Bekanntmachung des Hinweises auf die Patenterteilung: **31.08.2011**
(21) Anmeldenummer: 10160914.7
(22) Anmeldetag: 23.04.2010
(51) Int. Cl.: F16P 3/14, G01V 8/18

(54) **Zugangsabsicherungssystem**
Access control system
Système de sécurisation d'accès

(30) Priorität: 08.05.2009 DE 202009006683 U
(43) Veröffentlichungstag der Anmeldung: 10.11.2010
(73) Patentinhaber: Sick AG, 79183 Waldkirch (DE)
(72) Erfinder: Terrelonge, Dean, 79211, Denzlingen (DE)
(74) Vertreter: Ludewigt, Christoph

(56) Entgegenhaltungen:
- EP-A2- 0 544 239
- DE-A1- 10 313 194
- US-A1- 2008 021 597
- Allen Bradley: "User Manual Safezone Multizone Safety Laser Scanner" Mai 2005 (2005-05), XP002591411 Online Gefunden im Internet: URL:http://samplecode.rockwellautomation.c om/idc/groups/literature/documents/um/442l -um002_-en-p.pdf [gefunden am 2010-07-09]

## Beschreibung

Die Erfindung betrifft ein Zugangsabsicherungssystem.

Insbesondere mit der zunehmenden Automatisierung von Herstellungs- und Verpackungsprozessen gewinnen Zugangsabsicherungssysteme zunehmend an Bedeutung. Die Roboter, die die automatisierten Prozesse durchführen, stellen in der Regel ein erhebliches Gefährdungspotential für menschliches Personal dar, so dass sichergestellt werden muss, dass das Personal nicht in die durch den Arbeitsbereich des entsprechenden Roboters definierte Gefährdungszone eindringen kann, ohne eine Sicherheitsfunktion, z. B. die Schutzabschaltung des Roboters, auszulösen.

Dies wird in der Regel durch Verwendung von Lichtgittern zur Überwachung der Grenzen des Gefährdungsbereiches oder Sicherheitslaserscannern zur Überwachung des gesamten Gefährdungsbereiches erreicht, die, wenn eine Person oder ein Objekt in das definierte Schutzfeld eindringt, die Gefahrenquelle deaktivieren, z. B. indem der betreffende Roboter abgeschaltet wird.

Problematisch bei diesem Ansatz ist jedoch, dass bei einer Vielzahl von Anwendungen durchaus eine erwünschte Situation eintreten kann, in der einerseits für ein zulässiges Objekt ein Eindringen in das definierte Schutzfeld erfolgen soll, andererseits aber die den Durchsatz reduzierende Unterbrechung des Roboterbetriebs durch die Sicherheitsfunktion weder notwendig noch erwünscht ist. Dies ist beispielsweise der Fall, wenn ein Gabelstapler verwendet wird, um von einem Verpackungsroboter verpackte Pakete weiter zu transportieren.

Eine bekannte Lösung für dieses Problem besteht darin, Induktionsschleifen im Boden der entsprechenden Fertigungshalle anzuordnen, die, wenn sie vom Gabelstapler überfahren werden, ein Signal aussenden, das zu einer zeitweiligen Überbrückung der Sicherheitsfunktion führen. Diese Vorgehensweise führt jedoch zu einer Reihe praktischer Probleme: Erstens sind Installation, Reparatur und Wartung der Induktionsschleifen teuer und mit hohem Aufwand verbunden. Zweitens gibt es Interferenzeffekte zwischen Induktionsschleifen. Drittens arbeiten Induktionsschleifen in stark mit Stahl armierten Böden nicht zuverlässig. Viertens ist in Umgebungen, in denen mit Metallverpackungen gearbeitet wird - etwa in Brauereien, in denen Metallfässer Verwendung finden - eine fälschliche Überbrückung der Sicherheitsfunktion nicht auszuschließen.

Ebenfalls bekannt ist es, Objekte, deren Eindringen in den Schutzbereich nicht zur Sicherheitsfunktion führen soll, so zu markieren, dass sie mit Hilfe einer Reflexionslichtschranke identifiziert werden können. Liegt beim Eindringen in das Schutzfeld oder in einem diesem vorgelagerten Warnfeld gleichzeitig das Signal der Reflexionslichtschranke vor, so wird die Sicherheitsfunktion überbrückt. Diese Vorgehensweise erfordert aber nicht nur das Vorsehen einer zusätzlichen Reflexionslichtschranke, was kostenintensiv ist, sondern ist im realen Arbeitsumfeld, in dem es leicht zu Verschmutzungen von Reflexionselementen kommen kann, auch überaus fehleranfällig.

Die DE 103 13 194 A1 weist einen optischen Sensor mit einem Distanzsensorelement, mit einem Sendelichtstrahlen emittierenden Sender, einem Empfangslichtstrahlen empfangenden Empfänger und einer Auswerteeinheit auf. Weiterhin weist der optische Sensor eine Ablenkeinheit auf, mittels derer die Sendelichtstrahlen periodisch innerhalb eines einen Überwachungsbereich definierenden Winkelbereichs geführt sind. In der Auswerteeinheit ist wenigstens ein Schutzfeld abgespeichert. Weiterhin sind in der Auswerteeinheit winkelabhängige Auflösungsbereiche vorgegeben, deren Größen an eine Breite eines in der jeweiligen Winkelposition am Rand des Schutzfelds angeordneten Referenzobjekts angepasst sind. Dabei werden nur Objekte mit einer vorgegebenen Mindestgröße erfasst.

Aus dem User-Manual ,Safety Laser Scanner' von Allen-Bradley ist ein Laserscanner mit zwei Schutzfeldern und mehreren Warnfeldern offenbart.

Aufgabe der Erfindung ist die Bereitstellung eines verbesserten Zugangsabsicherungssystems, das diese Nachteile nicht mehr aufweist.

Die Aufgabe wird erfindungsgemäß gelöst durch ein Zugangsabsicherungssystem mit den Merkmalen des Schutzanspruchs 1.

Vorteilhafte Ausgestaltungen und Weiterbildungen der Erfindung sind in den Unteransprüchen angegeben.

Der Erfindung liegt der Gedanke zu Grunde, in einem Zugangsabsicherungssystem, das auf einem Sicherheits-Laserscanner basiert, eine sichere und zuverlässige Erkennung zugelassener Objekte zu gewährleisten, dass ein Schutzfeld und mindestens zwei vom Sicherheits-Laserscanner überwachte über das Schutzfeld hinausragende Warnfelder vorhanden sind und dass die Sicherheitsfunktion unterdrückt wird, wenn das Objekt zuvor in beiden Warnfeldern registriert wurde. Damit stehen zwei voneinander unabhängige Eingangsinformationen zur Verfügung, um das Schutzfeld sicher zu deaktivieren. Durch eine Anpassung der Feldgeometrie, insbesondere der Warnfelder an die Geometrie des zugelassenen Objekts kann, ggf. unter Verwendung zeitlicher Verzögerung, eine besonders sichere Erkennung garantiert werden.

Dementsprechend weist das erfindungsgemäße Zugangsabsicherungssystem einen Sicherheits-Laserscanner auf, der ein Schutzfeld und mindestens ein erstes und ein zweites Warnfeld, die sich in zumindest einer Richtung über das Schutzfeld hinaus erstrecken und außerhalb des Schutzfelds zumindest teilweise nicht überlappen, aufweist. Ferner besitzt der Sicherheits-Laserscanner mindestens eine Interface-Schnittstelle. Zum erfindungsgemäßen Zugangssicherungssystem gehört ferner ein Controller mit mindestens einer Interface-Schnittstelle, die mit der mindestens einen Interface-Schnittstelle des Sicherheits-Laserscanners zur Übermittlung von Messergebnissen des Sicherheits-Laserscanners an den Controller und/oder von Steuerbefehlen des Controllers an den Sicherheits-Laserscanner in Signalkommunikation steht. Die Schaltlogik des Controllers ist dabei so aufgebaut, dass beim Eindringen eines Objekts in das Schutzfeld eine Sicherheitsfunktion ausgelöst wird, die jedoch dann unterdrückt wird, wenn zuvor ein Eindringen des Objekts sowohl in das erste Warnfeld als auch in das zweite Warnfeld festgestellt wurde.

Vorzugsweise ist das Schutzfeld und das erste und zweite Warnfeld flächig in zwei Dimensionen ausgebildet. Dadurch kann einfach ein Flächenbereich, beispielsweise vor einer Be- und Entladestation einer Förderstrecke, überwacht werden.

Weiter ist es jedoch auch vorgesehen, dass das Schutzfeld und das erste und zweite Warnfeld räumlich in drei Dimensionen ausgebildet ist. Dadurch lassen sich Raumbereiche mit einem definierten Volumen überwachen. Dies ist beispielsweise dann von Vorteil, wenn die zu überprüfende Kontur eines Objektes beim Eindringen in das Schutzfeld eine komplexere Struktur aufweist oder eine räumliche Überprüfung des Objektes notwendig ist.

In einer besonders bevorzugten Ausführungsform des Zugangsabsicherungssystems erstrecken sich das erste und zweite Warnfeld in drei unterschiedlichen Richtungen über das Schutzfeld hinaus und überlappen außerhalb des Schutzfelds in jeder dieser Raumrichtungen zumindest teilweise nicht. Die Schutzfelder und das erste und zweite Warnfeld liegen dabei bevorzugt bei flächig ausgeführten Schutz- und Warnfeldern in einer gemeinsamen Ebene. Dadurch lassen sich mehrere zulässige Wege, auf denen sich das zugelassene Objekt in das Schutzfeld hineinbewegen kann, bereitstellen.

Bei einer wegen besonders hoher Sicherheit vorteilhaften Ausführungsform ist zur Unterdrückung der Warnfunktion ein Sicherheits-Relais vorgesehen.

Eine besonders nutzerfreundliche Variante des Zugangsabsicherungssystems sieht weiter einen Taster vor, dessen Betätigung das Zugangsabsicherungssystem in seinen Grundzustand zurücksetzt (Reset). Ebenfalls der Nutzerfreundlichkeit dient es, wenn das Zugangsabsicherungssystem ein Leuchtmittel zur Anzeige, dass ein Rücksetzen (Reset) notwendig ist, und/oder ein Leuchtmittel zur Anzeige, dass die Sicherheitsfunktion unterdrückt ist, aufweist.

Ein Ausführungsbeispiel der Erfindung wird anhand der folgenden Figuren ausführlich erläutert.

Es zeigt:
- Fig. 1: eine Schaltskizze eines Ausführungsbeispieles eines Zugangsabsiche- rungssystems
- Fig. 2: eine schematische Darstellung einer Ausführungsform der Feldkonfigu- ration von Schutzfeld und Warnfeldern

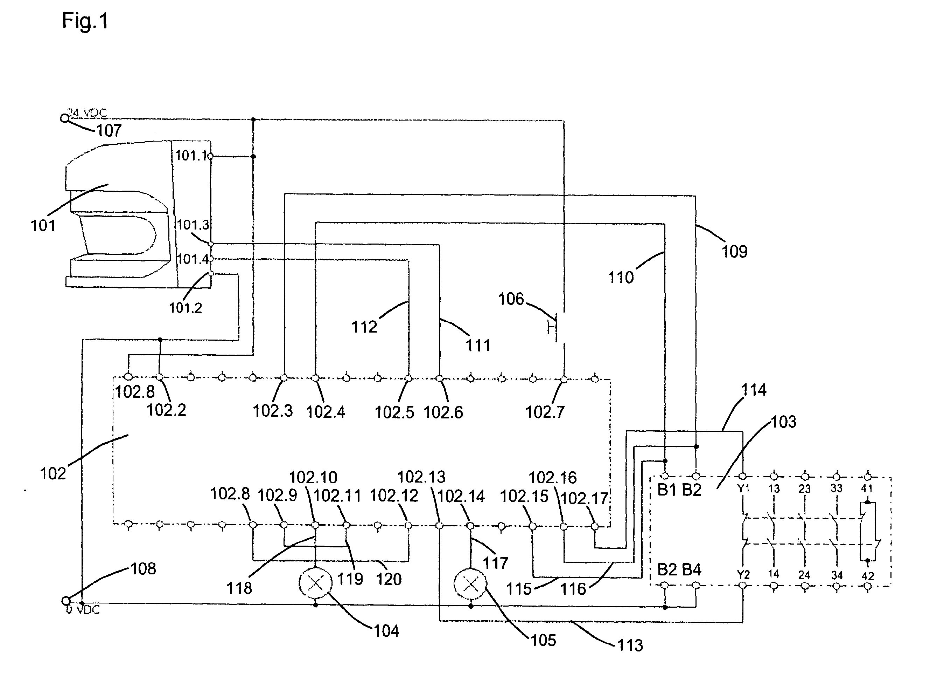

Figur 1 zeigt eine Schaltskizze eines Ausführungsbeispiels für ein Zugangsabsicherungssystem gemäß der Erfindung.

Das in Figur 1 dargestellte Zugangsabsicherungssystem weist einen Sicherheits-Laserscanner 101, einen Controller 102 und ein Sicherheits-Relais 103 auf. Zur Wechselwirkung mit einem Benutzer sind ferner zumindest zwei Leuchtmittel 104, 105 sowie ein Taster 106 vorgesehen. Grundsätzlich wäre es auch möglich, den Controller 102 und/oder das Sicherheits-Relais 103 in das Gehäuse des Sicherheits-Laserscanners 101 zu integrieren. Ferner sind eine erste Spannungsversorgungsleitung 107 und eine zweite Spannungsversorgungsleitung 108 sowie Signalverbindungen 109, 110, 111, 112, 113, 114, 115, 116, 117, 118, 119 und 120 dargestellt.

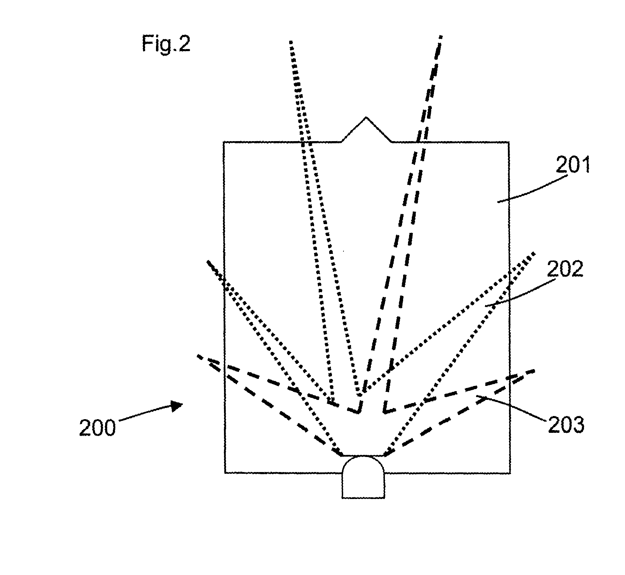

Der Sicherheits-Laserscanner 101 weist zumindest zwei Kontakte 101.1, 102.2 und zwei Interface-Schnittstellen 101.3, 101.4 auf. Er dient zur Erzeugung von mindestens zwei Warnfeldern 202, 203 und mindestens einem Schutzfeld 201 und zum Nachweis der Gegenwart eines Objektes in einem oder mehreren dieser Felder. Das Schutzfeld 201 und die Warnfelder 202, 203 sind in Figur 2 schematisch dargestellt, ihre Eigenschaften werden weiter unten anhand der Figur 2 genauer definiert.

Der Controller 102 weist zumindest auf:
- zwei Kontakte 102.1, 102.2
- sechs Input-Schnittstellen 102.3, 102.4, 102.7, 102.8, 102.9, 102.17
- zwei Interface-Schnittstellen 102.5, 102.6 und
- sieben Output-Schnittstellen 102.10, 102.11. 102.12, 102.13, 102.14, 102.15 und 102.16.

Der Controller dient in erster Linie dazu, die mit dem Sicherheits-Laserscanner gewonnenen Informationen zur Gegenwart von Objekten im Schutzfeld 201 und/oder in den Warnfeldern 202, 203 logisch auszuwerten und zu verarbeiten. Generell ist die Logik so ausgelegt, dass beim Eindringen eines Objekts in das Schutzfeld 201 eine Sicherheitsfunktion ausgelöst wird, es sei denn, dass zuvor die Anwesenheit eines Objekts in beiden Warnfeldern 202, 203 registriert wurde, was nur bei zulässigen Objekten erfolgt, da die Warnfelder 202, 203 so ausgelegt sind, dass nur zulässige Objekte - beispielsweise ein Gabelstapler - in beiden Warnfelder 202, 203 registriert werden.

Das Sicherheits-Relais 103 weist zumindest auf:
- zwei Kontakte B1, B2 für einen ersten Eingangsschaltkreis
- zwei Kontakte B3, B4 für einen zweiten Eingangsschaltkreis
- zwei Kontakte Y1, Y2 für eine Schützkontrolle (external device monitoring), also für einen Schaltkreis, mit dem eine berührungslos wirkende Schutzeinrichtung den Status von Steuerungsteilen überwacht, die außerhalb dieser Schutzeinrichtung sind.

Zusätzlich hat das dargestellte Sicherheits-Relais 103 auch noch Kontakte 13, 14, 23, 24, 33, 34 für einen sicheren ersten, zweiten und dritten Schaltkreis, um Aktoren ein- und auszuschalten und 41, 42 für einen weiteren Schaltkreis, um beispielsweise den Schaltzustand des Sicherheits-Relais rückzulesen. Weitere Kontakte, die typische Laserscanner 101 und Controller 102 - verwendbar sind z. B. SICK S3000 Sicherheits-Laserscanner und SICK UE440/470 Controller - üblicherweise aufweisen, sind nicht dargestellt, da sie für die hier dargestellte Anwendung nicht wesentlich sind.

Der Kontakt 101.1 ist mit der ersten Versorgungsspannungsleitung 107, die hier auf einem Potential von +24V DC gehalten wird, leitend verbunden. Der Kontakt 101.2 ist mit einer zweiten Versorgungsspannungsleitung 108, die hier auf Massepotential gehalten wird, leitend verbunden. Über die Kontakte 101.1, 101.2 wird die Spannungsversorgung für den Sicherheits-Laserscanner 101 sichergestellt.

Die Interface-Schnittstelle 101.3 ist über eine Signalverbindung 111 mit der Interface-Schnittstelle 102.6, die Interface-Schnittstelle 101.4 über eine Signalverbindung 112 mit der Interface-Schnittstelle 102.5 verbunden. Über diese Verbindungen können - beispielsweise unter Verwendung des sicheren EFI Schnittstellen Systems von SICK - Ergebnisse der Auswertung der unterschiedlichen, vom Sicherheits-Laserscanner 101 erzeugten Schutz- bzw. Warnfelder des Sicherheits-Laserscanners 101 an den Controller 102 weitergeleitet werden, und Steuersignale vom Controller 102 an den Sicherheits-Laserscanner 101 weitergegeben werden.

Der Grundgedanke der Erfindung besteht darin, dass nur bei einem zugelassenen Objekt dieses in beiden Warnfeldern 202, 203 registriert wird und beim Eintreten dieser Bedingung das Auslösen der Sicherheitsfunktion nicht erfolgt. Einerseits kann dies durch eine entsprechend aufgebaute Schaltlogik im Controller 102 sichergestellt werden, andererseits ist aber auch denkbar, durch einen Steuerbefehl des Controllers 102 an den Sicherheits-Laserscanner 101 diesen zu veranlassen, für eine gewisse Zeit oder solange das zugelassene Objekt in beiden Warnfeldern 202, 203 registriert wird, das Schutzfeld nicht mehr auszusenden oder nicht mehr auszuwerten.

Der Kontakt 102.1 des Controllers 102 ist mit der ersten Versorgungsspannungsleitung 107 leitend verbunden, der Kontakt 102.2 mit der zweiten Versorgungsspannungsleitung 108 leitend verbunden. Über die Kontakte 102.1, 102.2 wird die Spannungsversorgung des Controllers 102 sichergestellt.

Die Input-Schnittstelle 102.7 ist über einen Taster 106 leitfähig mit der ersten Versorgungsspannungsleitung 107 verbunden. Bei Betätigung des Tasters 106 wird die Input-Schnittstelle 102.7 somit auf das Potential der ersten Versorgungsspannungsleitung 107 gezogen. Der Controller 102 ist so aufgebaut, dass in diesem Fall ein Reset durchgeführt wird. Die Notwendigkeit, einen Reset zu initiieren wird durch das Leuchtmittel 104 angezeigt, dessen nicht separat dargestellte Kontakte einerseits über eine Signalverbindung 118 mit der Output-Schnittstelle 102.10 des Controllers und andererseits mit der zweiten Versorgungsspannungsleitung 108, die auf Massepotential gehalten wird, verbunden sind.

Um einem Benutzer anzuzeigen, dass die Sicherheitsfunktion gerade blockiert wird, ist das Leuchtmittel 105 vorgesehen, dessen nicht separat dargestellte Kontakte einerseits über eine Signalverbindung 117 mit der Output-Schnittstelle 102.14 des Controllers und andererseits mit der zweiten Versorgungsspannungsleitung 108, die auf Massepotential gehalten wird, verbunden ist.

Um bei einem hier dargestellten Controller 102 vom Typ SICK UE440/470 die nötige Schaltlogik für den Controller 102 zu definieren, müssen die Output-Schnittstelle 102.11 über eine Signalverbindung 119 mit der Input-Schnittstelle 102.9 und die Output-Schnittstelle 102.12 über eine Signalverbindung 120 mit der Input-Schnittstelle 102.8 verbunden sein. Die Output Schnittstelle 102.11 gibt ein Signal aus, wenn die Warnfelder gleichzeitig aktiviert werden und dient als Unterdrückungssignal oder Mute-Signal. Die Output Schnittstelle 102.12 gibt ein Signal aus, wenn ein Warnfeld aktiviert ist und dient auch als Unterdrückungssignal oder Mute-Signal. Die auf die Input-Schnittstellen 102.8 und 102.9 geführten Signale werden in dem Controller kombiniert oder logisch ,UND'-verknüpft und intern auf die Output-Schnittstelle 102.13 ausgegeben. An der Output-Schnittstelle 102.13 wird nur ein Signal ausgegeben, wenn beide Warnfelder nicht aktiviert sind und über die Leitung 114 erfolgt ein Reset Signal an der Input Schnittstelle 102.17.

Ferner besteht über die Signalverbindungen 115 und 110 eine Verbindung zwischen Output-Schnittstelle 102.15 und Input-Schnittstelle 102.4 und über die Signalverbindungen 116 und 109 eine Verbindung zwischen Output-Schnittstelle 102.16 und Input-Schnittstelle 102.3.

In dem Ausführungsbeispiel nach Figur 1 wird die Unterdrückung der Sicherheitsfunktion durch das separate Sicherheits-Relais 103 gesteuert. Die Kontakte B2 respektive B4 des ersten respektive zweiten Eingangsschaltkreises des Sicherheits-Relais 103 stehen in leitender Verbindung mit der zweiten Versorgungsspannungsleitung. Der Kontakt B1 des ersten Eingangsschaltkreises des Sicherheits-Relais 103 ist über die Signalverbindung 115 mit der Output-Schnittstelle 102.15 verbunden. Der Kontakt B3 des zweiten Eingangsschaltkreises des Sicherheitsrelais 103 ist über die Signalverbindung 116 mit der Output-Schnittstelle 102.16 verbunden. Ist die Auslösebedingung durch die an den Kontakten B1, B2, B3, B4 anliegenden Signale erfüllt, so wird das Signal der Output-Schnittstelle 102.13, das über die Signalverbindung 113 an Kontakt Y2 anliegt, durch das Sicherheitsrelais zum Kontakt Y1 durchgeschaltet, der über die Signalverbindung 114 mit der Input-Schnittstelle 102.17 in Signalkommunikation steht. Über die Input-Schnittstelle 102.17 werden die Kontakte Y1 und Y2 überwacht um zu prüfen, ob das Sicherheitsrelais ordnungsgemäß funktioniert, also eine Schützkontrolle durchgeführt.

Zusammenfassend dient also der Sicherheits-Laserscanner 101 der Bereitstellung des Schutzfeldes und zum Nachweis der zur Aufhebung der Ausführung der Sicherheitsfunktion dienenden Bedingungen, während der Kontroller die Schnittstellenkommunikation, die Auswertung der Bedingungen, die Steuerung etwaiger Output Signal Switching Devices und ein External Device Monitoring vornimmt und die Möglichkeit eines System-Resets bereitstellt.

Figur 2 zeigt eine schematische Darstellung einer Ausführungsform der Feldkonfiguration 200 des Zugangsabsicherungssystems, die durch den Sicherheits-Laserscanner 101 emittiert und überwacht wird. Dargestellt sind jeweils die Außenkonturen von zweidimensionalen Feldern, nämlich des Schutzfelds 201, des ersten Warnfelds 202 und des zweiten Warnfelds 203. Dabei sind die Außenkonturen des Schutzfelds 201 mit einer durchgezogenen Linie, die des ersten Warnfelds 202 mit einer gepunkteten Linie und die des zweiten Warnfelds 203 mit einer strichlierten Linie dargestellt. Das Schutzfeld 201, das erste Warnfeld 202 und das zweite Warnfeld 203 liegen dabei in einer gemeinsamen Ebene. Wie Figur 2 zu entnehmen ist, kann es innerhalb des Schutzfeldes 201 zu Überlagerungen zwischen Schutzfeld 201 und erstem Warnfeld 202, Schutzfeld 201 und zweitem Warnfeld 203 und Schutzfeld 201, erstem Warnfeld 202 und zweitem Warnfeld 203 kommen. Wesentlich ist jedoch, dass das erste Warnfeld 202 und das zweite Warnfeld 203 über den durch das Schutzfeld 201 überdeckten Bereich hinausgehen. In der in Figur 2 dargestellten Feldkonfiguration 200 ist dies für drei Richtungen der Fall, wodurch die Anzahl der erlaubten Zugangswege in das Schutzfeld 201 für ein zugelassenes Objekt erhöht wird.

Ferner ist wesentlich, dass sich außerhalb des Schutzfeldes 201 das erste Warnfeld 202 und das zweite Warnfeld 203 zumindest teilweise nicht überlappen.

Erfindungsgemäß führt das Eindringen eines Objekts in das Schutzfeld 201 dann nicht zum Auslösen der Sicherheitsfunktion, wenn es zuvor sowohl im ersten Warnfeld 202 als auch im zweiten Warnfeld 203 nachgewiesen worden ist. Durch Anpassung der Geometrie des ersten Warnfelds 202 und des zweiten Warnfelds 203 an die erlaubten Zugangswege einerseits und charakteristische Dimensionen eines zugelassenen Objekts - beispielsweise eines Gabelstaplers - andererseits, kann eine hohe Eindeutigkeit des Nachweises, dass in der Tat ein zugelassenes Objekt in das Schutzfeld eindringt, und damit sehr hohe Sicherheit des Zugangsabsicherungssystems erzielt werden.

### Bezugszeichenliste

- B1: Kontakt
- B2: Kontakt
- B3: Kontakt
- B4: Kontakt
- Y1: Kontakt
- Y2: Kontakt

- 13: Kontakt
- 14: Kontakt
- 23: Kontakt
- 24: Kontakt
- 33: Kontakt
- 34: Kontakt

- 101: Sicherheits-Laserscanner
- 102: Controller
- 103: Sicherheits-Relais
- 104: Leuchtmittel
- 105: Leuchtmittel
- 106: Taster
- 107: Versorgungsspannungsleitung
- 108: Versorgungsspannungsleitung
- 109: Signalverbindung
- 110: Signalverbindung
- 111: Signalverbindung
- 112: Signalverbindung
- 114: Signalverbindung
- 115: Signalverbindung
- 116: Signalverbindung
- 117: Signalverbindung
- 118: Signalverbindung
- 119: Signalverbindung
- 120: Signalverbindung

- 101.1: Kontakt
- 101.2: Kontakt
- 101.3: Interface-Schnittstelle
- 101.4: Interface-Schnittstelle
- 102.1: Kontakt
- 102.2: Kontakt
- 102.3: Input-Schnittstelle
- 102.4: Input-Schnittstelle
- 102.5: Interface-Schnittstelle
- 102.6: Interface-Schnittstelle
- 102.7: Input-Schnittstelle
- 102.8: Input-Schnittstelle
- 102.9: Input-Schnittstelle
- 102.10: Output-Schnittstelle
- 102.11: Output-Schnittstelle
- 102.12: Output-Schnittstelle
- 102.13: Output-Schnittstelle
- 102.14: Output-Schnittstelle
- 102.15: Output-Schnittstelle
- 102.16: Output-Schnittstelle
- 102.17: Input-Schnittstelle

- 200: Feldkonfiguration
- 201: Schutzfeld
- 202: erstes Warnfeld
- 203: zweites Warnfeld

## Patentansprüche

1. Zugangsabsicherungssystem
mit einem Sicherheits-Laserscanner (101), wobei der Sicherheits-Laserscanner (101) im Betrieb ein Schutzfeld (201) und mindestens ein erstes und ein zweites Warnfeld (202,203), die sich in zumindest einer Richtung über das Schutzfeld (201) hinaus erstrecken und außerhalb des Schutzfelds (201) zumindest teilweise nicht überlappen, und mindestens eine Interface-Schnittstelle (101.3, 101.4) aufweist,
und mit einem Controller (102) mit mindestens einer Interface-Schnittstelle (102.5, 102.6), die mit der mindestens einen Interface-Schnittstelle (101.3,101.4) des Sicherheits-Laserscanners (101) zur Übermittlung von Messergebnissen des Sicherheits-Laserscanners (101) an den Controller (102) und/oder von Steuerbefehlen des Controllers (102) an den Sicherheits-Laserscanner (101) in Signalkommunikation steht, **dadurch gekennzeichnet, dass** die Logik des Controllers (102) so aufgebaut ist, dass beim Eindringen eines Objekts in das Schutzfeld (201) eine Sicherheitsfunktion ausgelöst wird, die jedoch dann unterdrückt wird, wenn zuvor ein Eindringen des Objekts sowohl in das erste Warnfeld (202) als auch in das zweite Warnfeld (203) festgestellt wurde.

2. Zugangsabsicherungssystem nach Anspruch 1,
**dadurch gekennzeichnet, dass** das Schutzfeld (201) und die Warnfelder (202, 203) zweidimensional als Fläche oder dreidimensional als Raum ausgebildet sind.

3. Zugangsabsicherungssystem nach Anspruch 1,
**dadurch gekennzeichnet, dass** sich das erste und zweite Warnfeld (202,203) in jeweils drei unterschiedlichen Richtungen über das Schutzfeld (201) hinaus erstrecken und außerhalb des Schutzfelds (201) in jeder dieser Richtungen zumindest teilweise nicht überlappen.

4. Zugangsabsicherungssystem nach Anspruch 1 oder 2,
**dadurch gekennzeichnet, dass** zur Unterdrückung der Warnfunktion ein Sicherheits-Relais (103) vorgesehen ist.

5. Zugangsabsicherungssystem nach einem der vorhergehenden Ansprüche,
**dadurch gekennzeichnet, dass** ein Taster (106) vorgesehen ist, dessen Betätigung das Zugangsabsicherungssystem in seinen Grundzustand zurücksetzt.

6. Zugangsabsicherungssystem nach einem der vorhergehenden Ansprüche,
**dadurch gekennzeichnet, dass** das Zugangsabsicherungssystem ein Leuchtmittel (104) zur Anzeige, dass ein Reset notwendig ist, aufweist.

7. Zugangsabsicherungssystem nach einem der vorstehenden Ansprüche,
**dadurch gekennzeichnet, dass** das Zugangsabsicherungssystem ein Leuchtmittel (105) zur Anzeige, dass die Sicherheitsfunktion unterdrückt ist, aufweist.

## Claims

1. An access protection system
having a safety laser scanner (101), wherein, in operation, the safety laser scanner (101) has a protected field (201) and at least one first and one second warning field (202, 203) which extend in at least one direction beyond the protected field (201) and at least partly do not overlap outside the protected field (201), and at least one interface (101.3, 101.4);
and having a controller (102) with at least one interface (102.5, 102.6) which is in signal communication with the at least one interface (101.3, 101.4) of the safety laser scanner (101) for transmitting measurement results of the safety laser scanner (101) to the controller (102) and/or control commands of the controller (102) to the safety laser scanner (101), **characterised in that** the logic of the controller (102) is structured so that, when an object intrudes into the protected field (201), a safety function is triggered which is, however, suppressed if previously an intrusion of the object was found both into the first warning field (202) and into the second warning field (203).

2. An access protection system in accordance with claim 1,
**characterised in that** the protected field (201) and the warning fields (202, 203) are designed as two-dimensional as an area or as three-dimensional as a space.

3. An access protection system in accordance with claim 1,
**characterised in that** the first and second warning fields (202, 203) extend in three respective different directions beyond the protected field (201) and at least partly do not overlap in each of these directions outside the protected field (201)+.

4. An access protection system in accordance with claim 1 or claim 2,
**characterised in that** a safety relay (103) is provided for suppressing the warning function.

5. An access protection system in accordance with any one of the preceding claims, **characterised in that** a button (106) is provided whose actuation resets the access protection system into its base state.

6. An access protection system in accordance with any one of the preceding claims, **characterised in that** the access protection system has a lamp (104) for displaying that a reset is necessary.

7. An access protection system in accordance with any one of the preceding claims, **characterised in that** the access protection system has a lamp (105) for displaying that a safety function has been suppressed.

## Revendications

1. Système de sécurisation d'accès
comprenant un scanneur laser de sécurité (101), ledit scanneur laser de sécurité (101) produisant en fonctionnement un champ de protection (201) et au moins un premier et un second champ d'avertissement (202, 203), qui s'étendent dans au moins une direction au-delà du champ de protection (201) et qui, à l'extérieur du champ de protection (201) ne se chevauchent au moins partiellement pas, et comprenant au moins une interface (101.3, 101.4),
et comprenant un contrôleur (102) avec au moins une interface (102.5, 102.6), qui communique en ce qui concerne les signaux avec ladite au moins une interface (101.3, 101.4) du scanneur laser de sécurité (101) pour transmettre les résultats de mesure du scanneur laser de sécurité (101) au contrôleur (102) et/ou pour transmettre des ordres de commande du contrôleur (102) au scanneur laser de sécurité (101),
**caractérisé en ce que** l'unité logique du contrôleur (102) est constituée de telle façon que lors de la pénétration d'un objet dans le champ de protection (201) une fonction de sécurité est déclenchée, celle-ci étant cependant inhibée quand une pénétration de l'objet a été auparavant constatée aussi bien dans le premier champ d'avertissement (202) que dans le second champ d'avertissement (203).

2. Système de sécurisation d'accès selon la revendication 1,
**caractérisé en ce que** le champ de protection (201) et les champs d'avertissement (202, 203) sont réalisés en deux dimensions sous forme de surface ou en trois dimensions sous forme d'espace.

3. Système de sécurisation d'accès selon la revendication 1,
**caractérisé en ce que** le premier et le second champ d'avertissement (202, 203) s'étendent respectivement dans trois directions différentes au-delà du champ de protection (201) et ne se chevauchent au moins partiellement pas à l'extérieur du champ de protection (201) dans chacune de ces directions.

4. Système de sécurisation d'accès selon la revendication 1 ou 2,
**caractérisé en ce que** pour inhiber la fonction d'avertissement, il est prévu un relais de sécurité (103).

5. Système de sécurisation d'accès selon l'une des revendications précédentes,
**caractérisé en ce qu'**il est prévu une touche (106) dont l'actionnement remet le système de sécurisation d'accès dans son état de base.

6. Système de sécurisation d'accès selon l'une des revendications précédentes,
**caractérisé en ce que** le système de sécurisation d'accès comprend un moyen d'éclairage (104) pour indiquer qu'une remise à zéro est nécessaire.

7. Système de sécurisation d'accès selon l'une des revendications précédentes,
**caractérisé en ce que** le système de sécurisation d'accès comprend un moyen d'éclairage (105) pour indiquer que la fonction de sécurité est inhibée.
